# DEMANDE DE BREVET EUROPEEN

(11) **EP 1 445 916 A2**
(43) Date de publication de la demande: **11.08.2004**
(21) Numéro de dépôt: 04290125.6
(22) Date de dépôt: 16.01.2004
(51) Int. Cl.: H04L 29/06

(54) **Procédé et système d'authentification d'un utilisateur au niveau d'un réseau d'accès lors d'une connexion de l'utlisateur au réseau internet**

(30) Priorité: 10.02.2003 FR 0301566
(71) Demandeur: FRANCE TELECOM, 75015 Paris (FR)
(72) Inventeur: Morand, Lionel, 92240 Malakoff (FR); Transy, Estelle, 92130 Issy Les Moulineaux (FR); Delmond, Frédéric, 75011 Paris (FR); Carpy, Céline, 92350 Le Plessis Robinson (FR)
(74) Mandataire: de Roquemaurel, Bruno

(57) **Abrégé**

Ce procédé consiste à: émettre par un terminal (11) d'utilisateur vers un fournisseur d'accès ou de service IP une requête d'accès (31) contenant des données d'identification et d'authentification de l'utilisateur auprès du fournisseur et auprès d'un opérateur de réseaux d'accès et de transport IP, cette requête d'accès étant transmise par l'intermédiaire du réseau d'accès (1, 2, 5) à un serveur d'authentification (AAA) du fournisseur d'accès ou de service IP ; transmettre au préalable la requête d'accès à un serveur d'authentification (12) de l'opérateur des réseaux ; exécuter une procédure d'authentification de l'utilisateur par le serveur d'authentification (12), sur la base des données d'identification de l'utilisateur auprès de l'opérateur ; exécuter une procédure d'authentification de l'utilisateur par le serveur d'authentification (AAA), sur la base des données d'identification de l'utilisateur auprès du fournisseur; et transmettre au terminal (11) d'utilisateur un message de réponse contenant le résultat de l'authentification de l'utilisateur par les serveurs d'authentification (AAA) et (12).

## Description

La présente invention concerne la fourniture de services basés sur un transport IP (Internet Protocol) tels que la connexion au réseau Internet ou la téléphonie sur IP.

A l'heure actuelle, de tels services sont assurés par un opérateur de réseaux d'accès / transport IP (ORA/OTI) en collectant les trafics IP générés par les utilisateurs à partir de différents réseaux d'accès (réseau téléphonique commuté RTC, numérique RNIS, réseaux DSL, etc.) et en les concentrant en un flux IP. Ces trafics IP collectés et concentrés sont ensuite délivrés, dans un modèle fermé, en un ou plusieurs points de livraison du réseau d'un fournisseur d'accès Internet (FAI) ou d'un fournisseur de service IP (FSI) choisi par l'utilisateur. Dans un modèle ouvert, ces trafics IP peuvent être acheminés directement dans un réseau de transport en fonction des adresses IP de leurs destinataires. Dans le modèle fermé, tout le trafic collecté est en général transmis au fournisseur d'accès Internet ou de service IP en utilisant un tunnel entre une passerelle IP, par exemple de type NAS (Network Access Server) ou BAS (Broadband Access Server) et le réseau du fournisseur d'accès Internet ou de service IP.

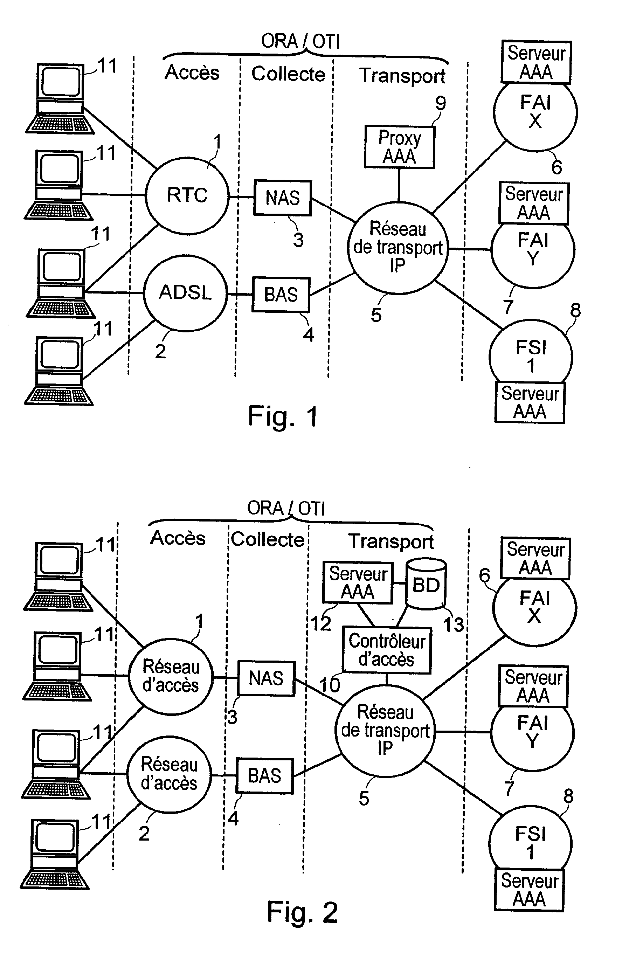

La figure 1 annexée illustre le modèle ouvert.

Sur cette figure, le réseau de collecte assure la collecte des trafics IP au niveau local. Ce réseau comprend différents types de passerelles IP 3, 4 assurant l'interface avec les réseaux d'accès 1, 2 existants. Les passerelles bas débit 3, par exemple de type NAS, assurent l'interface avec les réseaux 1 de type RTC et RNIS (Réseau Numérique à Intégration de Services), et les passerelles haut débit 4, par exemple de type BAS, réalisent une interface pour les accès ADSL (Asymmetric Digital Subscriber Line) à travers un réseau ATM (Asynchronous Transfer Mode).

Le trafic IP issu des terminaux 11, à destination des passerelles IP 3, 4 est encapsulé dans des trames conformes au protocole PPP (Point-to-Point Protocol). En début de connexion, ce protocole permet de véhiculer des informations nécessaires à la configuration de la connexion IP et à l'authentification du terminal de l'utilisateur. Ces informations sont ensuite reçues par les passerelles IP 3, 4 qui les encapsulent dans des messages conformes à un protocole d'authentification, d'autorisation et de comptage tel que RADIUS (Remote Authentication Dial In User Service) ou Diameter, puis les transmettent à un serveur Proxy 9 d'authentification contrôlé par l'opérateur des réseaux d'accès et de transport IP. Le serveur Proxy 9 est conçu pour aiguiller de telles requêtes d'authentification au travers d'un réseau de transport IP 5 vers un serveur AAA (Authentication, Authorization and Accounting) contrôlé par le fournisseur d'accès à Internet 6, 7 ou le fournisseur de services IP 8 demandé par l'utilisateur. Le serveur AAA authentifie l'utilisateur et l'autorise à ouvrir une session PPP. A la fin d'une connexion IP, les passerelles IP 3, 4 émettent un ticket contenant toutes les informations nécessaires pour facturer l'utilisateur.

Dans cette architecture (figure 1), les utilisateurs du réseau de transport IP sont authentifiés uniquement par le serveur d'authentification AAA du fournisseur 6, 7, 8 de service ou d'accès à Internet, à l'aide d'informations telles qu'un identifiant de la forme "IdFAI@domaineFAI" et un mot de passe, qui sont attribuées par le fournisseur d'accès ou de service. En règle générale, les opérateurs (ORA/OTI) des réseaux d'accès / transport IP ne peuvent pas utiliser ces informations d'authentification pour identifier l'utilisateur, étant donné que ces informations sont gérées par un domaine administratif différent. Il en résulte que le serveur proxy 9 ne peut pas vérifier ces informations et ne peut donc que les acheminer vers le fournisseur d'accès ou de service demandé par l'utilisateur, afin d'obtenir du fournisseur l'authentification de l'utilisateur.

En outre, les procédures actuellement mises en oeuvre pour réaliser une connexion IP/PPP via les réseaux d'accès 1, 2, tels que RTC, RNIS ou ADSL ne permettent pas d'effectuer une authentification de l'utilisateur au niveau des réseaux d'accès.

Pourtant, il existe un besoin d'identification de l'utilisateur par l'opérateur des réseaux d'accès / transport IP pour pouvoir lui offrir des services personnalisés à forte valeur ajoutée au niveau du réseau d'accès, tout en assurant la continuité du service de collecte actuel. A titre d'exemple de tels services, on peut citer la gestion de la mobilité des utilisateurs nomades, la personnalisation de l'accès en fonction de préférences prédéfinies par l'utilisateur, ou la facturation unique multi accès qui consiste à rassembler sur une même facture tous les accès effectués par un utilisateur quel que soit le terminal ou le point d'accès utilisé.

La présente invention a pour but de supprimer ces inconvénients, tout en proposant une architecture qui respecte les procédures actuelles d'établissement d'une connexion PPP/IP. Cet objectif est atteint par la prévision d'un procédé d'authentification d'un utilisateur par un opérateur de réseaux d'accès et de transport IP lors d'une tentative de connexion à un fournisseur d'accès Internet ou de service IP, ce procédé consistant à :
- émettre par un terminal d'utilisateur à un fournisseur d'accès ou de service IP une requête d'accès contenant des données d'identification et d'authentification de l'utilisateur, cette requête d'accès étant transmise par l'intermédiaire d'un réseau d'accès et d'un réseau de transport IP à un serveur d'authentification du fournisseur d'accès ou de service IP,
- exécuter une procédure d'authentification de l'utilisateur par le serveur d'authentification sur la base des données d'identification et d'authentification contenues dans la requête, et
- transmettre au terminal d'utilisateur un message de réponse contenant le résultat de l'authentification de l'utilisateur par le serveur d'authentification.

Selon l'invention, ce procédé comprend en outre des étapes consistant à :
- insérer au préalable dans la requête d'accès des données d'identification et d'authentification de l'utilisateur auprès de l'opérateur des réseaux d'accès et de transport IP,
- transmettre la requête d'accès transitant dans le réseau de transport IP à un serveur d'authentification de l'opérateur des réseaux d'accès et de transport IP, et
- exécuter une procédure d'authentification de l'utilisateur par le serveur d'authentification de l'opérateur des réseaux d'accès et de transport IP, sur la base des données d'identification et d'authentification de l'utilisateur auprès de l'opérateur des réseaux d'accès et de transport IP, contenues dans la requête d'accès.

De préférence, l'étape d'insertion dans la requête d'accès des données d'identification et d'authentification de l'utilisateur auprès de l'opérateur des réseaux d'accès et de transport IP, est facultative, au choix de l'utilisateur.

Avantageusement, il comprend en outre une étape d'insertion dans le message de réponse du résultat de l'authentification de l'utilisateur par le serveur d'authentification de l'opérateur des réseaux d'accès et de transport IP.

Selon une particularité de l'invention, ce procédé comprend en outre des étapes de génération d'une requête d'accès ne contenant pas les données d'identification et d'authentification de l'utilisateur auprès de l'opérateur des réseaux d'accès et de transport IP, et de transmission de cette requête d'accès au fournisseur d'accès Internet ou de service IP.

Selon une autre particularité de l'invention, ce procédé comprend en outre une étape d'insertion dans le message de réponse de données de profil de l'utilisateur si celui-ci est authentifié lors de la procédure d'authentification exécutée par le serveur d'authentification de l'opérateur des réseaux d'accès et de transport IP.

Avantageusement, les étapes d'authentification de l'utilisateur par les serveurs d'authentification du fournisseur d'accès Internet ou de service IP et de l'opérateur des réseaux d'accès et de transport IP sont effectuées l'une à la suite de l'autre.

Alternativement, les étapes d'authentification de l'utilisateur par les serveurs d'authentification du fournisseur d'accès Internet ou de service IP et de l'opérateur des réseaux d'accès et de transport IP sont déclenchées sensiblement simultanément.

Selon une particularité de l'invention, les données d'identification et d'authentification insérées dans les requêtes d'accès sont de la forme :
"IdFAI|IDR|AUTH@DomaineFAI, PW"
dans laquelle :
- "IdFAI" représente l'identifiant de l'utilisateur auprès du fournisseur d'accès ou de service IP,
- "IDR" représente l'identifiant de l'utilisateur auprès de l'opérateur des réseaux d'accès et de transport IP,
- "AUTH" représente une donnée d'authentification de l'utilisateur auprès de l'opérateur des réseaux d'accès et de transport IP, et
- "DomaineFAI" représente l'identifiant du fournisseur d'accès ou de service IP dans le réseau de transport IP
- "PW" représente un mot de passe d'authentification associé à l'identifiant "IdFAI" de l'utilisateur auprès du fournisseur d'accès ou de service IP.

L'invention concerne également un système d'authentification d'utilisateurs par un opérateur de réseaux d'accès et de transport IP lors d'une tentative de connexion à un fournisseur d'accès Internet ou de service IP, ce système comprenant :
- des réseaux d'accès auxquels sont connectés des terminaux des utilisateurs,
- au moins un réseau de transport IP auxquels sont connectés des fournisseurs d'accès à Internet et de services IP,
- des passerelles IP assurant la liaison entre les réseaux d'accès et le réseau de transport IP,
- des moyens prévus dans chaque terminal d'utilisateur pour émettre des requêtes d'accès à l'un des fournisseurs d'accès ou de service IP, ces requêtes contenant des données d'identification et d'authentification de l'utilisateur auprès d'un des fournisseurs d'accès ou de service IP, et
- au moins un serveur d'authentification pour chacun des fournisseurs d'accès ou de service IP, conçu pour identifier et authentifier les utilisateurs en fonction des données d'identification et d'authentification contenues dans les requêtes d'accès reçues par le fournisseur d'accès ou de service IP.

Selon l'invention, chaque terminal d'utilisateur comprend des moyens pour insérer dans chaque requête d'accès émise des données d'identification et d'authentification de l'utilisateur auprès d'un opérateur des réseaux d'accès et de transport IP, le système comportant en outre un contrôleur d'accès et un serveur d'authentification de l'opérateur des réseaux d'accès et de transport IP, le contrôleur d'accès comprenant des moyens pour recevoir toutes les requêtes d'accès provenant des terminaux d'utilisateurs et transmises par le réseau de transport IP, et des moyens pour extraire de chacune des requêtes d'accès les données d'identification et d'authentification de l'utilisateur auprès de l'opérateur des réseaux d'accès et de transport IP et pour transmettre ces données au serveur d'authentification de l'opérateur des réseaux d'accès et de transport IP, le serveur d'authentification de l'opérateur des réseaux d'accès et de transport IP comprenant des moyens pour exécuter une procédure d'authentification, sur la base des données d'identification et d'authentification reçues du contrôleur d'accès.

Selon une particularité de l'invention, le contrôleur d'accès comprend des moyens pour insérer dans des messages de réponse aux requêtes d'accès, émis par les fournisseurs d'accès ou de service IP, le résultat de la procédure d'authentification de l'utilisateur, exécutée par le serveur d'authentification de l'opérateur des réseaux d'accès et de transport IP.

Selon une autre particularité de l'invention, ce système comprend en outre une base de données contenant les données d'identification des utilisateurs de l'opérateur des réseaux d'accès et de transport IP, et des données de profil de ces utilisateurs, cette base de données étant accessible au serveur d'authentification de l'opérateur des réseaux d'accès et de transport IP et/ou du contrôleur d'accès.

Avantageusement, le contrôleur d'accès est un serveur Proxy RADIUS et le serveur d'authentification est un serveur RADIUS.

Un mode de réalisation préféré de l'invention sera décrit ci-après, à titre d'exemple non limitatif, avec référence aux dessins annexés dans lesquels :
La figure 1 représente schématiquement l'architecture d'un système de fourniture de services basés sur un transport IP, selon l'art antérieur ;
La figure 2 représente schématiquement l'architecture d'un système de fourniture de services basés sur un transport IP, selon l'invention ;
La figure 3 représente un diagramme de séquencement des procédures exécutées et des messages échangés dans le système représenté sur la figure 2.

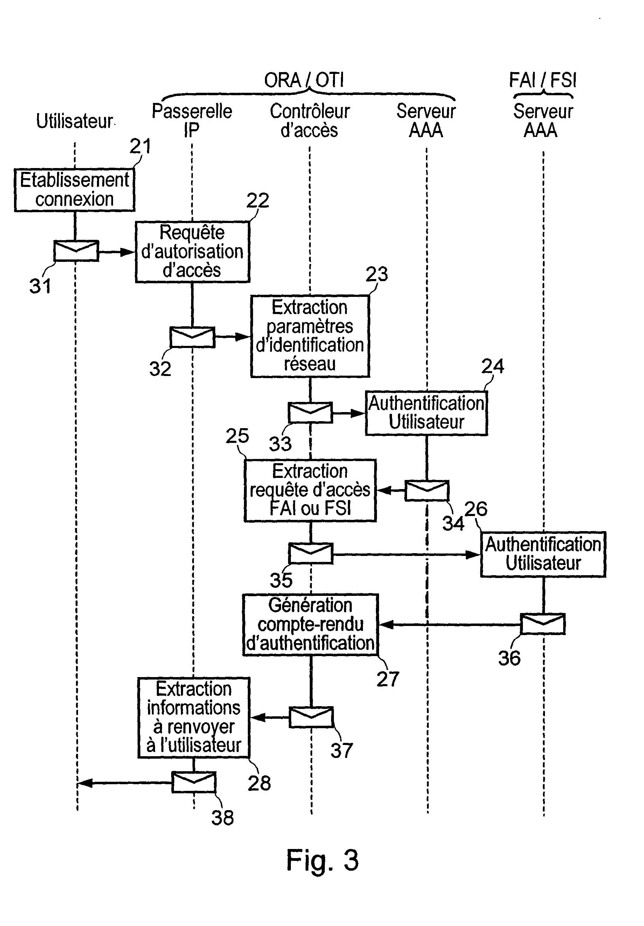

L'architecture du système représenté sur la figure 2 comprend des réseaux d'accès 1, 2 auxquels sont connectés des terminaux 11 d'utilisateurs. Ces réseaux d'accès 1, 2 fournissent aux terminaux 11 un accès à un réseau de transport IP 5 par l'intermédiaire de passerelles IP 3, 4 respectives adaptées au réseau d'accès. L'ensemble des réseaux d'accès, des passerelles et du réseau de transport IP est mis en oeuvre par un opérateur ORA/OTI de réseaux d'accès et de transport IP.

Le réseau de transport IP 5 permet aux utilisateurs d'accéder à un fournisseur d'accès Internet 6, 7 ou à un fournisseur de services IP 8. A cet effet, ce système comprend, selon l'invention, un contrôleur d'accès 10 connecté au réseau de transport IP 5 et auquel les passerelles IP 3, 4 transmettent des requêtes d'accès émises par les terminaux 11.

Le système selon l'invention comprend également un serveur d'authentification AAA 12 connecté au contrôleur d'accès 10 et une base de données d'utilisateurs 13 accessible par le serveur d'identification 12 et éventuellement par le contrôleur d'accès 10, cette base de données contenant des données d'identification et de profil des utilisateurs vis-à-vis de l'opérateur ORA/OTI.

Le contrôleur d'accès 10 est conçu pour recevoir toutes les requêtes d'accès à un fournisseur 6, 7, 8 d'accès ou de service, émises par les utilisateurs sur les réseaux 1, 2, ces requêtes étant transmises au contrôleur d'accès par la passerelle 3, 4 correspondant au réseau d'accès employé, avant d'être transmises au fournisseur 6, 7, 8 d'accès ou de service sélectionné par l'utilisateur. Le serveur d'authentification 12 est conçu pour exécuter une procédure d'authentification pour chaque requête d'accès reçue, cette procédure faisant appel aux informations d'identification et d'authentification stockées dans la base de données 13.

Une requête d'accès à un fournisseur de d'accès ou de service émise par un utilisateur comprend une requête d'autorisation d'ouverture d'une session PPP. A la réception d'une telle requête, le contrôleur d'accès 10 demande au serveur d'authentification 12 d'authentifier l'utilisateur, le serveur déclenchant alors la procédure d'authentification. D'une manière classique, le contrôleur d'accès demande également au fournisseur d'accès ou de service 6, 7, 8 d'authentifier l'utilisateur. Lorsque le serveur d'authentification 12 et le fournisseur d'accès ou de service ont envoyé leur réponse concernant l'authentification de l'utilisateur, le contrôleur d'accès émet une réponse à la demande d'autorisation d'accès à destination du terminal 11 de l'utilisateur, en fonction des réponses d'authentification reçues.

Il est à noter que l'insertion par le terminal de l'utilisateur d'une requête d'autorisation d'ouverture de session PPP peut être facultative, au choix de l'utilisateur, l'authentification de l'utilisateur par l'opérateur ORA/OTI étant nécessaire uniquement lorsque l'utilisateur souhaite bénéficier de services personnalisés au niveau du réseau d'accès ou de transport IP. Si l'authentification auprès de l'opérateur ORA/OTI échoue, le contrôleur d'accès 10 suit la procédure de gestion de droit d'accès préconisée par l'opérateurORA/OTI.

Lorsqu'une requête reçue par le contrôleur d'accès 10 ne comporte pas d'informations d'identification de l'utilisateur auprès de l'opérateur ORA/OTI, cette requête est retransmise d'une manière classique, sans traitement de la part du contrôleur d'accès 10, au fournisseur d'accès ou de service IP demandé.

Le séquencement des messages échangés et des procédures d'authentification est illustré par le diagramme représenté sur la figure 3.

Pour accéder à Internet ou à un service IP, le terminal 11 de l'utilisateur exécute une procédure 21 d'établissement d'une connexion PPP comportant l'émission d'un message 31 de requête d'accès contenant des informations d'identification et d'authentification de l'utilisateur auprès de son fournisseur d'accès à Internet 6, 7 ou son fournisseur de service 8. L'information d'identification qui est par exemple de la forme "IdFAI@domaineFAI", est associée à une information d'authentification telle qu'un mot de passe, "IdFAI" permettant d'identifier d'une manière unique l'utilisateur auprès du fournisseur d'accès ou de service. En outre, le message 31 de requête d'accès comprend selon l'invention des informations d'identification et d'authentification de l'utilisateur auprès de son opérateur ORA/OTI d'accès et de transport IP.

Le message 31 de requête d'accès est envoyé par le terminal 11 à la passerelle IP 3, 4 correspondante. A la réception d'un tel message, la passerelle IP exécute une procédure 22 consistant à encapsuler le message 31 reçu dans un message 32 de requête d'autorisation d'accès au réseau IP. Ce message est transmis par la passerelle IP au contrôleur d'accès 10 de l'opérateur ORA/OTI des réseaux d'accès et de transport IP.

A la réception du message 32, le contrôleur d'accès 10 exécute une procédure 23 consistant à extraire du message 32 les informations d'identification et d'authentification de l'utilisateur auprès de l'opérateur d'accès et de transport IP, et à transmettre ces informations au serveur d'authentification 12 sous la forme d'un message 33.

A la réception du message 33, le serveur d'authentification 12 déclenche une procédure d'authentification 24 de l'utilisateur consistant à vérifier que les informations d'identification et d'authentification reçues correspondent bien à celles qui sont mémorisées pour un utilisateur dans la base de données 13. Le serveur d'authentification 12 transmet ensuite un message de compte rendu 34 de cette vérification au contrôleur d'accès 10.

Durant la procédure 23 ou dans une autre procédure 25 déclenchée à la réception du message 34, le contrôleur d'accès 10 extrait du message de requête d'autorisation d'accès 33 la requête 35 d'accès au fournisseur d'accès ou de service 6, 7, 8 et transmet cette requête à ce dernier.

A la réception de cette requête 35, le fournisseur d'accès ou de service déclenche une procédure 26 consistant à vérifier si l'utilisateur est autorisé à accéder au réseau Internet ou au service IP, compte tenu de l'identifiant et du mot de passe contenus dans la requête, et à renvoyer un message 36 de compte-rendu d'authentification au contrôleur d'accès 10.

A la réception des deux messages 34, 36 de compte-rendu d'authentification de l'utilisateur, en provenance du serveur d'authentification 12 et du fournisseur d'accès ou de service IP 6, 7, 8, le contrôleur d'accès 10 exécute une procédure 27 de génération d'un message 37 de réponse à la requête d'accès émise par l'utilisateur et transmet ce message de réponse à la passerelle IP 3, 4.

Ce message de réponse 27 contient le compte-rendu d'authentification émis par le fournisseur d'accès ou de service IP 6, 7, 8, et éventuellement le compte-rendu d'authentification émis par le serveur d'authentification 12.

Si le compte-rendu d'authentification par le serveur d'authentification 12 indique un succès, il peut contenir des informations relatives au profil de services souscrits par l'utilisateur auprès de l'opérateur de réseaux ORA/OTI, ces informations étant par exemple stockées dans la base de données 13 en association avec l'identifiant de l'utilisateur.
Alternativement, ces informations de profil peuvent être retrouvées dans la base de données 13 par le contrôleur d'accès 10 si l'utilisateur a été préalablement authentifié par le serveur d'authentification 12.

Il est à noter que les procédures d'authentification 24 et 26 exécutées par le serveur 12 et par le fournisseur d'accès ou de service 6, 7, 8 peuvent être exécutées simultanément ou bien séquentiellement dans un ordre quelconque.

A la réception du message de réponse 27, la passerelle IP 3, 4 exécute une procédure 28 consistant à extraire de ce message de réponse les informations à renvoyer à l'utilisateur, et éventuellement à exploiter les informations de profil contenues dans ce message, puis à transmettre au terminal d'utilisateur dans un message 38 toutes les informations extraites qui lui sont destinées.

Grâce à ces dispositions, l'opérateur ORA/OTI peut adapter les services de connexion et de transmission qu'il offre à ses utilisateurs en fonction de l'identité de ces derniers, en offrant par exemple un service minimum aux utilisateurs non reconnus.

L'invention qui vient d'être décrite peut être réalisée en mettant en oeuvre des protocoles d'authentification tels que celui utilisé dans les connexions basées sur le protocole PPP, à savoir le protocole PAP (Password Authentication Protocol), et le protocole RADIUS.

Ainsi, le contrôleur d'accès 10 peut être développé sur la base d'un serveur Proxy RADIUS et le serveur d'authentification 12 sur la base d'un serveur RADIUS.

Le protocole PAP permet à l'utilisateur de s'authentifier auprès de son fournisseur d'accès ou de service IP en lui transmettant un identifiant de la forme "IdFAI@DomaineFAI" et en composant un mot de passe.

Pour transmettre les informations nécessaires à l'authentification de l'utilisateur par le contrôleur d'accès 10, on peut prévoir d'insérer l'identifiant réseau IDR de l'utilisateur et l'information d'authentification associée AUTH dans l'identifiant de l'utilisateur auprès de son fournisseur d'accès, de la manière suivante :
"IdFAI|IDR|AUTH@DomaineFAI"

Le message 31 correspond au message "PAP_Authenticate_Request" et contient la chaîne d'identification ci-dessus et le mot de passe d'authentification (PW) auprès du fournisseur d'accès ou de service, fournis par l'utilisateur.

Le message 32 généré par la procédure 22 est un message RADIUS "Access-Request" ayant notamment pour attributs :
UserName = "IdFAI|IDR|AUTH@DomaineFAI"
UserPassword = "PW"

La procédure 23 consiste à extraire de l'attribut "UserName" du message 32 la partie "IDR|AUTH" nécessaire à l'identification de l'utilisateur par l'opérateur ORA/OTI, et à l'insérer dans le message 33 qui est de type RADIUS "Access-Request" les attributs suivants :
UserName = "IDR"
UserPassword = "AUTH"

La procédure d'authentification 24 exécutée par le serveur RADIUS 12 consiste à rechercher si l'identifiant "IDR" se trouve dans la base de données 13 et s'il y est associé au mot de passe "AUTH" et à émettre un message 34 de compte-rendu de type message RADIUS "Access-Accept" ou "Access-Reject" selon le résultat de l'authentification.

Le serveur d'authentification du fournisseur d'accès ou de service 6, 7, 8 est également un serveur RADIUS, et le message 35, également de type message RADIUS "Access-Request" contient les attributs suivants :
UserName = "IdFAI"
UserPassword = "PW"

Le message 36 de compte-rendu est également un message de type RADIUS "Access-Accept" ou "Access-Reject" selon le résultat de l'authentification.

La procédure 27 consiste, pour générer le message 37, par exemple à insérer dans le message 36 un attribut "ReplyMessage" contenant le résultat de l'authentification effectuée par le serveur d'authentification 12, par exemple "succès" ou "échec".

Le message 38 généré par la passerelle 3, 4 au cours de la procédure 28 est un message de type "PAP _Authenticate_Ack" en cas d'accès accepté, ou "PAP_Authenticate_Nack" en cas d'accès refusé, et contient le contenu de l'attribut "ReplyMessage" du message 36.

Bien entendu, tout autre protocole d'authentification, tel que Diameter peut être mis en oeuvre par l'invention pour authentifier les utilisateurs auprès des différents services.

## Revendications

1. Procédé d'authentification d'un utilisateur par un opérateur de réseaux d'accès et de transport IP lors d'une tentative de connexion à un fournisseur (6, 7, 8) d'accès Internet ou de service IP, ce procédé consistant à :
- émettre par un terminal (11) d'utilisateur à un fournisseur d'accès ou de service IP une requête d'accès (31) contenant des données d'identification et d'authentification de l'utilisateur, cette requête d'accès étant transmise par l'intermédiaire d'un réseau d'accès (1, 2) et d'un réseau de transport IP (5) à un serveur d'authentification (AAA) du fournisseur d'accès ou de service IP,
- exécuter une procédure d'authentification (26) de l'utilisateur par le serveur d'authentification sur la base des données d'identification et d'authentification contenues dans la requête, et
- transmettre au terminal (11) d'utilisateur un message de réponse (36) contenant le résultat de l'authentification de l'utilisateur par le serveur d'authentification (AAA),
**caractérisé en ce qu'**il comprend en outre des étapes consistant à :
- insérer au préalable dans la requête d'accès (31) des données d'identification et d'authentification de l'utilisateur auprès de l'opérateur des réseaux d'accès et de transport IP,
- transmettre la requête d'accès transitant dans le réseau de transport IP à un serveur d'authentification (12) de l'opérateur des réseaux d'accès et de transport IP, et
- exécuter une procédure d'authentification (24) de l'utilisateur par le serveur d'authentification (12) de l'opérateur des réseaux d'accès et de transport IP, sur la base des données d'identification et d'authentification de l'utilisateur auprès de l'opérateur des réseaux d'accès et de transport IP, contenues dans la requête d'accès (31).

2. Procédé selon la revendication 1,
**caractérisé en ce que** l'étape d'insertion dans la requête d'accès (31) des données d'identification et d'authentification de l'utilisateur auprès de l'opérateur des réseaux d'accès et de transport IP, est facultative, au choix de l'utilisateur.

3. Procédé selon la revendication 1 ou 2,
**caractérisé en ce qu'**il comprend en outre une étape d'insertion dans le message de réponse (36) du résultat de l'authentification de l'utilisateur par le serveur d'authentification (12) de l'opérateur des réseaux d'accès et de transport IP.

4. Procédé selon l'une des revendications 1 à 3,
**caractérisé en ce qu'**il comprend en outre des étapes de génération d'une requête d'accès (35) ne contenant pas les données d'identification et d'authentification de l'utilisateur auprès de l'opérateur des réseaux d'accès et de transport IP, et de transmission de cette requête d'accès au fournisseur d'accès Internet ou de service IP (6, 7, 8).

5. Procédé selon l'une des revendications 1 à 4,
**caractérisé en ce qu'**il comprend en outre une étape d'insertion dans le message de réponse (36) de données de profil de l'utilisateur si celui-ci est authentifié lors de la procédure d'authentification exécutée par le serveur d'authentification (12) de l'opérateur des réseaux d'accès et de transport IP.

6. Procédé selon l'une des revendications 1 à 5,
**caractérisé en ce que** les étapes d'authentification (24, 26) de l'utilisateur par les serveurs d'authentification (AAA, 12) du fournisseur d'accès Internet ou de service IP et de l'opérateur des réseaux d'accès et de transport IP sont effectuées l'une à la suite de l'autre.

7. Procédé selon l'une des revendications 1 à 5,
**caractérisé en ce que** les étapes d'authentification (24, 26) de l'utilisateur par les serveurs d'authentification (AAA, 12) du fournisseur d'accès Internet ou de service IP et de l'opérateur des réseaux d'accès et de transport IP sont déclenchées sensiblement simultanément.

8. Procédé selon l'une des revendications 1 à 7,
**caractérisé en ce que** les données d'identification et d'authentification insérées dans les requêtes d'accès (31) sont de la forme :
"IdFAI|IDR|AUTH@DomaineFAI, PW"
dans laquelle :
- "IdFAI" représente l'identifiant de l'utilisateur auprès du fournisseur d'accès ou de service IP,
- "IDR" représente l'identifiant de l'utilisateur auprès de l'opérateur des réseaux d'accès et de transport IP,
- "AUTH" représente une donnée d'authentification de l'utilisateur auprès de l'opérateur des réseaux d'accès et de transport IP, et
- "DomaineFAI" représente l'identifiant du fournisseur d'accès ou de service IP dans le réseau de transport IP (5)
- "PW" représente un mot de passe d'authentification associé à l'identifiant "IdFAI" de l'utilisateur auprès du fournisseur d'accès ou de service IP.

9. Système d'authentification d'utilisateurs par un opérateur de réseaux d'accès et de transport IP lors d'une tentative de connexion à un fournisseur d'accès Internet ou de service IP (6, 7, 8), ce système comprenant :
- des réseaux d'accès (1, 2) auxquels sont connectés des terminaux (11) des utilisateurs,
- au moins un réseau de transport IP (5) auxquels sont connectés des fournisseurs d'accès à Internet et de services IP,
- des passerelles IP (3, 4) assurant la liaison entre les réseaux d'accès et le réseau de transport IP,
- des moyens prévus dans chaque terminal d'utilisateur pour émettre des requêtes d'accès (31) à l'un des fournisseurs d'accès ou de service IP, ces requêtes contenant des données d'identification et d'authentification de l'utilisateur auprès d'un des fournisseurs d'accès ou de service IP, et
- au moins un serveur d'authentification (AAA) pour chacun des fournisseurs d'accès ou de service IP, conçu pour identifier et authentifier les utilisateurs en fonction des données d'identification et d'authentification contenues dans les requêtes d'accès (31) reçues par le fournisseur d'accès ou de service IP,
**caractérisé en ce que** chaque terminal (11) d'utilisateur comprend des moyens pour insérer dans chaque requête d'accès (31) émise des données d'identification et d'authentification de l'utilisateur auprès d'un opérateur des réseaux d'accès et de transport IP, le système comportant en outre un contrôleur d'accès (10) et un serveur d'authentification (12) de l'opérateur des réseaux d'accès et de transport IP, le contrôleur d'accès comprenant des moyens pour recevoir toutes les requêtes d'accès provenant des terminaux d'utilisateurs et transmises par le réseau de transport IP (5), et des moyens pour extraire de chacune des requêtes d'accès les données d'identification et d'authentification de l'utilisateur auprès de l'opérateur des réseaux d'accès et de transport IP et pour transmettre ces données au serveur d'authentification (12) de l'opérateur des réseaux d'accès et de transport IP, le serveur d'authentification de l'opérateur des réseaux d'accès et de transport IP comprenant des moyens pour exécuter une procédure d'authentification (24), sur la base des données d'identification et d'authentification reçues du contrôleur d'accès.

10. Système selon la revendication 9,
**caractérisé en ce que** le contrôleur d'accès (10) comprend des moyens pour insérer dans des messages de réponse aux requêtes d'accès, émis par les fournisseurs d'accès ou de service IP (6, 7 8), le résultat de la procédure d'authentification (24) de l'utilisateur, exécutée par le serveur d'authentification (12) de l'opérateur des réseaux d'accès et de transport IP.

11. Système selon la revendication 9 ou 10,
**caractérisé en ce qu'**il comprend en outre une base de données (13) contenant les données d'identification des utilisateurs de l'opérateur des réseaux d'accès et de transport IP, et des données de profil de ces utilisateurs, cette base de données étant accessible au serveur d'authentification (12) de l'opérateur des réseaux d'accès et de transport IP et/ou du contrôleur d'accès.

12. Système selon l'une des revendications 9 à 11,
**caractérisé en ce que** le contrôleur d'accès (10) est un serveur Proxy RADIUS et le serveur d'authentification (12) est un serveur RADIUS.
